# EUROPÄISCHE PATENTSCHRIFT

(11) **EP 0 547 367 B1**
(45) Veröffentlichungstag und Bekanntmachung des Hinweises auf die Patenterteilung: **18.09.1996**
(21) Anmeldenummer: 92119172.2
(22) Anmeldetag: 09.11.1992
(51) Int. Cl.: F16K 1/52, F15B 11/04

(54) **Schaltventil für pneumatische oder hydraulische Druckmittel**
Switch valve for pneumatic or hydraulic fluid
Soupape de commutation pour fluide hydraulique ou pneumatique

(30) Priorität: 13.12.1991 DE 4141205
(43) Veröffentlichungstag der Anmeldung: 23.06.1993
(73) Patentinhaber: Fibro GmbH, D-74189 Weinsberg (DE)
(72) Erfinder: Massmann, Hans Joachim, Dipl.-Ing., W-6953 Gundelsheim (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- WO-A-89/11609
- CH-A- 351 147
- DE-A- 2 215 857
- FR-A- 2 214 075
- US-A- 2 966 170
- US-A- 3 107 079
- US-A- 3 752 188

## Beschreibung

Die Erfindung betrifft ein Schaltventil für pneumatische oder hydraulische Druckmittel mit einem Gehäuse, das einen ersten und einen zweiten Druckmittelanschluß aufweist, die innerhalb des Gehäuses miteinander in Verbindung stehen, und einem im Gehäuse angeordneten Ventilglied, das mit einem Ventilsitz als Ventilanordnung zusammenwirkt und von einer Offenstellung in eine Schließstellung umschaltbar ist

Bisher bekannte Schaltventile werden beispielsweise auch zur Steuerung von Handhabungsautomaten oder von anderen hydraulischen oder pneumatischen Antrieben eingesetzt.

Die Schaltvorgänge dieser Ventile laufen jedoch abrupt ab, wodurch auch die Bewegungen der von diesen Ventilen gesteuerten Antriebe ruckartige Änderungen erfahren, oder sie müssen durch aufwendige Proportional-Ventiltechnik gesteuert werden.

Alle diese Ventile besitzen in der Regel einen Durchflußspalt und keinen Durchflußraum, was zur Folge hat, daß das durchströmende Medium einen nicht vernachlässigbaren Druckabfall beim Durchströmen dieser Ventile erfährt, welcher zu einer Verminderung der Eilganggeschwindigkeit führt.

Ein Ventil der eingangs genannten Art ist aus der DE-A-22 15 857 bekannt. Ein derartiges Ventil wird im allgemeinen für die Wasserversorgung von Waschbecken, Duschen und dergleichen verwendet, um den Durchfluß von Wasser jeweils nur für einen vorgegebenen Zeitraum zu ermöglichen. Durch Öffnen des Ventils wird eine Verbindung zwischen dem Einlaßund Auslaßanschluß hergestellt, so daß das Ventil von Wasser durchströmt werden kann. Nach einer bestimmten Zeit wird durch eine Feder das Ventil automatisch geschlossen, wodurch der bis dahin im wesentlichen konstante Wasserdurchfluß abrupt unterbrochen wird. Da die maximal durch das Ventil fließende Wassermenge von einem ringförmigen Durchflußspalt bestimmt wird, der im Vergleich zu den Einlaß- und Auslaßanschlüssen einen geringen Querschnitt aufweist, erfährt das durchströmende Wasser auch bei vollständig geöffnetem Ventil einen nicht vernachlässigbaren Druckabfall.

Es ist die Aufgabe der vorliegenden Erfindung, ein Schaltventil der eingangs genannten Gattung derart auszubilden, daß mit diesem Ventil sanfte Bewegungsänderungen eines angeschlossenen Antriebs gesteuert werden können und daß bei maximaler Durchströmung ein vernachlässigbar kleiner Druckabfall entsteht.

Ausgehend von einem Schaltventil der eingangs genannten Art wird diese Aufgabe nach der Erfindung dadurch gelöst, daß der zweite Druckmittelanschluß ein freies Ende aufweist, das sich in den Durchflußraum hinein erstreckt und den Ventilsitz für das Ventilglied bildet, daß das Ventilglied eine den Durchflußraum bodenseitig begrenzende Fläche aufweist, die dem Ventilsitz gegenüberliegend angeordnet ist, so daß das einströmende Druckmittel gegen die Fläche geleitet wird, und daß das Ventilglied von der Offenstellung, in der Ventilglied und Ventilsitz voneinander getrennt sind, in die Schließstellung, in der die Fläche des Ventilglieds am Ventilsitz anliegt, gesteuert verfahrbar ist, wobei beim Öffnen des Ventils eine Volumenvergrößerung und beim Schließen des Ventils eine Volumenverkleinerung des Durchflußraums erfolgt.

Aufgrund des gesteuert veränderbaren Durchflußraumes des Ventils wird auf einfache Weise die Durchflußmenge des Druckmittels verändert, wodurch gleichzeitig eine Veränderung der Bewegungsgeschwindigkeit des vom Druckmittel beaufschlagten Antriebsorgans bewirkt wird. Auf diese Weise kann das Antriebsorgan gesteuert beschleunigt oder abgebremst werden, so daß eine ruckfreie, kontinuierliche Geschwindigkeitsänderung des Antriebsorgans ermöglicht wird.

Vorteilhaft ist, wenn das Ventil als Kolben ausgebildet ist und das Gehäuse einen Zylinderabschnitt aufweist, in dem der Kolben axial verschiebbar aufgenommen ist. Das Ventilglied kann auch als Membran ausgebildet sein, die im Gehäusehohlraum aufgenommen ist.

Durch das Vorsehen eines Steuerdruckraums gemäß Anspruch 4 kann das Schaltventil seinerseits hydraulisch oder pneumatisch angesteuert werden. Das Vorsehen einer Drosselöffnung zwischen dem ersten und zweiten Druckmittelanschluß gemäß Anspruch 5 gestattet die Einstellung eines unabhängig von der Stellung des Schaltventils geöffneten Durchflußquerschnitts für das Druckmittel, wodurch eine minimale Antriebsgeschwindigkeit des Antriebsorgans vorgebbar ist. Die Drosselöffnung kann gemäß Anspruch 6 mit einem Drosselventil veränderbar sein, so daß über die Einstellung des wirksamen Querschnitts der Drosselöffnung die Minimalgeschwindigkeit des Antriebsorgans veränderbar oder fest einstellbar ist.

Ist das Drosselventil gemäß Anspruch 7 zwischen einem vorgegebenen wirksamen Querschnitt der Drosselöffnung und einer Schließstellung umschaltbar, so kann bei geschlossenem Schaltventil und geschlossenem Drosselventil ein völliger Stillstand des Antriebsorgans erzielt werden. Dazu kann das Schaltventil zunächst bei geöffnetem Drosselventil kontinuierlich geschlossen werden, wodurch die Geschwindigkeit des Antriebsorgans bis auf die vom Drosselventil vorgegebene minimale Geschwindigkeit kontinuierlich abgesenkt wird, und aus dieser minimalen Geschwindigkeit kann das Antriebsorgan dann durch Schließen des Drosselventils bis zum Stillstand abgebremst werden.

Ein besonders vorteilhafter Aufbau des Schaltventils ist in Anspruch 8 angegeben, wobei der rohrförmige Ansatz vorzugsweise axial angeordnet ist, so daß der Kolben mit seiner als Dichtfläche wirkenden Stirnfläche gegen den am freien Ende des Ansatzes ausgebildeten Ventilsitz abdichtend zur Anlage geraten kann. Eine besonders wirksame Anordnung des Drosselventils ist dafür in Anspruch 9 angegeben.

Der Aufbau des Gehäuses gemäß Anspruch 10 gestattet eine wirtschaftliche Fertigung des Gehäuses sowie eine betriebssichere Funktion des Schaltventils.

Das Schaltventil nach Anspruch 11 vereint in besonders kompakter Bauweise in einem Gehäuse zwei unabhängig voneinander arbeitende und individuell steuerbare Ventilanordnungen.

Die Erfindung wird nachfolgend anhand eines Beispiels unter Bezugnahme auf die Zeichnung näher erläutert; in dieser zeigt:
- Figur 1: eine erste Ausführungsform des Schaltventils nach der Erfindung,
- Figur 2: eine weitere Ausführungsform des Schaltventils nach der Erfindung,
- Figur 3: eine Anordnung von zwei Ventilen gemäß Figur 1 in einem Gehäuse,
- Figur 4: ein Anwendungsbeispiel für einen Pneumatik motor,
- Figur 5: ein Anwendungsbeispiel für einen Hydraulikmotor
- Figur 6: ein Anwendungsbeispiel für einen Pneumatikzylinder,
- Figur 7: ein Anwendungsbeispiel für einen Hydraulikzylinder.

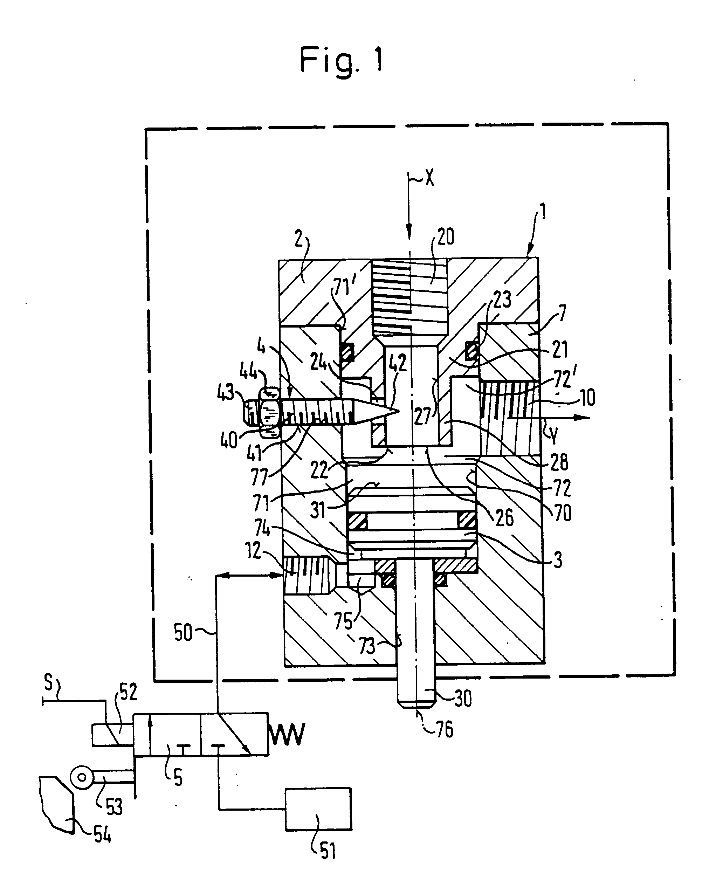

Figur 1 zeigt ein Schaltventil mit einem Gehäuse 1, das aus einem Gehäusegrundkörper 7 mit einem darin enthaltenen, einseitig offenen Gehäusehohlraum 71 versehen ist, der von einem Anschlußflansch 2 verschlossen ist. Der Anschlußflansch 2 besitzt einen vorspringenden Abschnitt 21, der mittels einer Dichtung 23 abdichtend in die öffnung des Gehäusehohlraums 71 eingreift und den Gehäusehohlraum 71 verschließt.

An seinem vom offenen Ende 71' abgewandten Bereich ist der Gehäusehohlraum 71 als Zylinderabschnitt 70 ausgebildet. In dem Zylinderabschnitt 70 ist ein Kolben 3 axial verschiebbar angeordnet. Der Kolben 3 besitzt eine Kolbenstange 30, die durch eine Axialbohrung 73 des Gehäusegrundkörpers 7 abdichtend aus dem Gehäuse 1 herausgeführt ist. Der Kolben 3 teilt den Gehäusehohlraum 71 in einen zwischen Kolben 3 und Anschlußflansch 2 ausgebildeten Durchflußraum 72 und einen auf der vom Anschlußflansch 2 abgewandten Seite des Kolbens ausgebildeten Steuerdruckraum 74.

Der Steuerdruckraum 74 ist über einen Kanal 75 mit dem Steuerdruckanschluß 12 in der Wandung des Gehäusegrundkörpers 7 verbunden. Eine Leitung 50 verbindet den Steuerdruckanschluß 12 mit einem Vorsteuerventil 5. Das Vorsteuerventil 5 wird von einer Druckquelle 51 mit Druck beaufschlagt. Die Auslösung des Vorsteuerventils 5 kann entweder durch ein auf ein elektromagnetisches Betätigungselement 52 wirkendes Steuersignal S oder alternativ dazu durch ein mechanisches Betätigungselement 53 erfolgen, welches beispielsweise von der Kulisse 54 einer Betätigungseinrichtung beaufschlagbar ist.

Der in den Gehäusehohlraum 71 eingreifende vorspringende Abschnitt 21 des Anschlußflansches 2 ist mit einem im wesentlichen rohrförmigen Ansatz 28 versehen, der mit seinem freien Ende im wesentlichen koaxial zur Achse 76 des Zylinderabschnitts 70 verläuft. Der rohrförmige Ansatz 28 besitzt einen vorzugsweise koaxialen Kanal 27, der mit dem im Anschlußflansch ausgebildeten zweiten Druckmittelanschluß 20 in Verbindung steht. Am freien Ende 26 des rohrförmigen Ansatzes 28 mündet der Kanal 27 in den Durchflußraum 72 wobei an der Mündung 26 ein Ventilsitz 22 ausgebildet ist, gegen den die Stirnfläche 31 des Kolbens 3 zum Abdichten des Kanals 27 gegenüber dem Durchflußraum 72 verfahrbar ist.

Im Bereich des rohrförmigen Ansatzes 28 bildet der Durchflußraum 72 einen ringförmigen Raum 72'. In der Seitenwandung des Gehäusegrundkörpers 7 ist in Höhe des ringförmigen Raums 72' der sich im wesentlichen radial erstreckende erste Druckmittelanschluß 10 vorgesehen.

Auf der dem ersten Druckmittelanschluß 10 diagonal gegenübergelegenen Seite ist in der Wandung des rohrförmigen Ansatzes 28 eine sich radial erstreckende Drosselöffnung 24 vorgesehen. Ein Drosselstift 40 greift mit seiner kegeligen Dichtfläche 42 in die Drosselöffnung 24 ein. Der Drosselstift 40 ist an seinem Schaftabschnitt mit einem Außengewinde 41 versehen, das in einem Innengewinde 77 in der Wandung des Gehäusegrundkörpers 7 geführt ist. Der Drosselstift 40 ist an seinem aus dem Gehäuse 1 herausragenden freien Ende 43 mit einer Ansatzfläche für ein Werkzeug, beispielsweise einen Schraubendreher oder einen Mehrkantschlüssel, versehen. Eine auf den aus dem Gehäuse 1 herausragenden Abschnitt des Drosselstiftes 40 geschraubte Mutter 44 dient dazu, den Drosselstift 40 gegen die Wandung des Gehäusegrundkörpers 7 zu kontern.

Wird der Druckraum 72 von einem beispielsweise durch den zweiten Druckmittelanschluß 20 eintretenden und aus dem ersten Druckmittelanschluß 10 austretenden Druckmittel durchströmt, wie dies die Pfeile X und Y andeuten, so ist bei der in Figur 1 gezeigten zurückgezogenen Lage des Kolbens 3 eine im wesentlichen ungehinderte Durchströmung des Ventils möglich.

Soll der Durchfluß des Druckmittels durch das Ventil nun kontinuierlich verringert werden, beispielsweise um die Geschwindigkeit eines vom Druckmittel betriebenen hydraulischen Antriebs abzubremsen, so wird über das auf das elektromagnetische Betätigungselement 52 wirkende Steuersignal S oder die auf das mechanische Betätigungselement 53 wirkende Schaltkulisse 54 das Vorsteuerventil 5 betätigt, wodurch ein Durchlaß für das von der Druckquelle 51 gelieferte Druckmedium in die Leitung 50 und damit durch den Steuerdruckanschluß 12 in den Steuerdruckraum 74 geschaffen wird. Das von der Druckquelle 51 ausströmende Medium dringt in den Steuerdruckraum 74 ein und verschiebt dabei den Kolben 3 kontinuierlich gegen das freie Ende des rohrförmigen Ansatzes 28 (in Figur 1 nach oben), bis daß der Kolben mit seiner Stirnfläche 31 am Ventilsitz 22 zur Anlage gerät und die Mündung 26 des Kanals 27 in den Durchflußraum 72 abdichtet.

Während sich der Kolben auf die Mündung 26 des Kanals 27 zubewegt, wird das Volumen des Durchflußraums 72 kontinuierlich verringert, so daß für das durch den Durchflußraum 72 strömende Medium der nutzbare freie Strömungsquerschnitt im Ventil kontinuierlich abnimmt, wodurch unter Erhöhung des Strömungswiderstandes der Volumenstrom des Druckmittels durch das Ventil verringert wird. Dadurch wird die Geschwindigkeit des vom Druckfluid betätigten Antriebs ebenfalls kontinuierlich herabgesetzt.

Liegt der Kolben 3 mit seiner Stirnfläche abdichtend am Ventilsitz 22 an, so verbleibt als einziger Strömungsdurchlaß für das vom zweiten Druckmittelanschluß 20 zum ersten Druckmittelanschluß 10 strömende Medium die vom Drosselventil 4 einstellbar vorgegebene Drosselöffnung 24. Der durch diese Drosselöffnung strömende Volumenstrom des Druckmittels bestimmt die im vom Druckmittel beaufschlagten Antrieb erzielbare Mindestgeschwindigkeit.

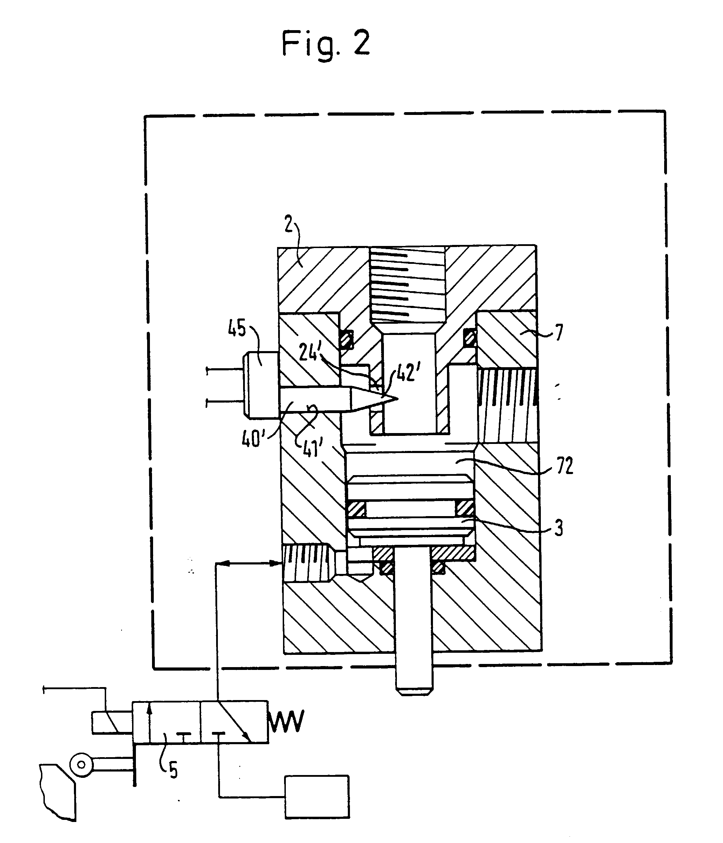

Figur 2 zeigt ein dem Schaltventil der Figur 1 entsprechendes Schaltventil mit einem Gehäusegrundkörper 7, einem Anschlußflansch 2 und einem Kolben 3, bei dem anstelle des mit dem Gewinde versehenen und in die Wandung des Gehäusegrundkörpers 7 eingeschraubten Drosselstiftes 40 ein in einer Radialbohrung 41' der Wandung des Gehäusegrundkörpers 7 verschiebbarer Drosselstift 40' vorgesehen ist, der ebenfalls eine kegelige Dichtfläche 42' aufweist, die in die Drosselöffnung 24' eingreift.

Der Drosselstift 40' ist von einem Schaltmagneten 45 beaufschlagt, der eine Bewegung des Drosselstiftes zwischen einer Schließstellung, in der die kegelige Dichtfläche 42' des Drosselstiftes 40' die Drosselöffnung 24' verschließt, und einer vorgebbar geöffneten Stellung zuläßt. Bei dieser Ausbildung des Schaltventils kann durch eine Betätigung des Schaltmagneten 45 beispielsweise nach Erreichen der Minimalgeschwindigkeit die Drosselöffnung 24 geschlossen werden, so daß die Durchströmung des Durchflußraums 72 vollständig unterbrochen ist. Das vom Druckmittel beaufschlagte Antriebsorgan kommt daher zum Stillstand.

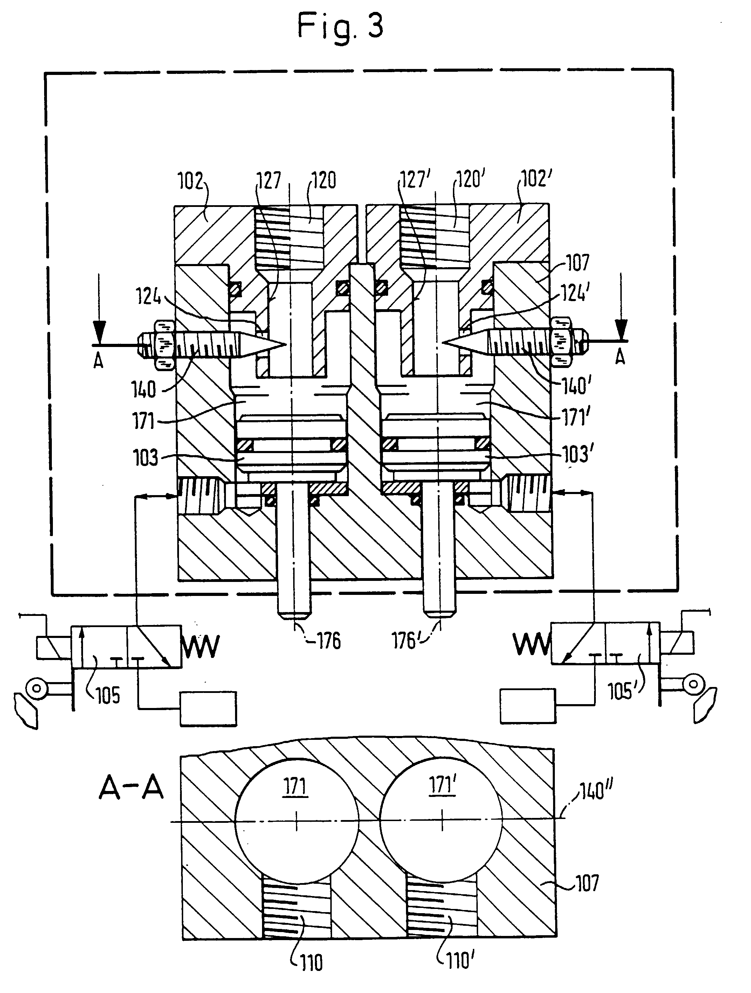

Figur 3 zeigt eine Anordnung von zwei Schaltventilen der in Figur 1 gezeigten Art in einem gemeinsamen Gehäuseblock 107. In dem Gehäuseblock 107 sind zwei Gehäusehohlräume 171, 171' ausgebildet, in denen je ein Kolben 103, 103' wie in der Ausführung der Figur 1 axial verschiebbar aufgenommen ist. Jeder der Hohlräume 171, 171' ist von einem Anschlußflansch 102, 102' verschlossen. Jeder Anschlußflansch 102, 102' ist mit einem koaxial zur Kolbenachse 176, 176' verlaufenden zweiten Druckmittelanschluß 120, 120' versehen, der jeweils über einen koaxialen Kanal 127, 127' mit dem zugehörigen Gehäusehohlraum 171, 171' in Verbindung steht.

Drosselstifte 140, 140' zum Einstellen der jeweiligen Drosselöffnung 124, 124' sind an zwei voneinander abgewandten Seiten des Gehäusegrundkörpers 107 ausgebildet und entsprechen jeweils der Konstruktion der Figur 1.

Die in der Gehäusewandung des Gehäusegrundkörpers 107 vorgesehenen ersten Druckmittelanschlüsse 110, 110' liegen im rechten Winkel zur gemeinsamen Achsenrichtung 140'' der Drosselstifte 140, 140' und sind beide in derselben Außenwand des Gehäusegrundkörpers 107 angeordnet, wie der in der unteren Hälfte der Figur 3 gezeigte Schnitt AA zeigt. (Im Schnitt AA sind zur Vereinfachung die Drosselstifte 140, 140' nicht gezeigt, sondern nur deren gemeinsame Achse 140''.)

Die Steuerung der Kolben 103, 103' erfolgt wie im in Bezug mit Figur 1 beschriebenen Beispiel über die Vorsteuerventile 105, 105'.

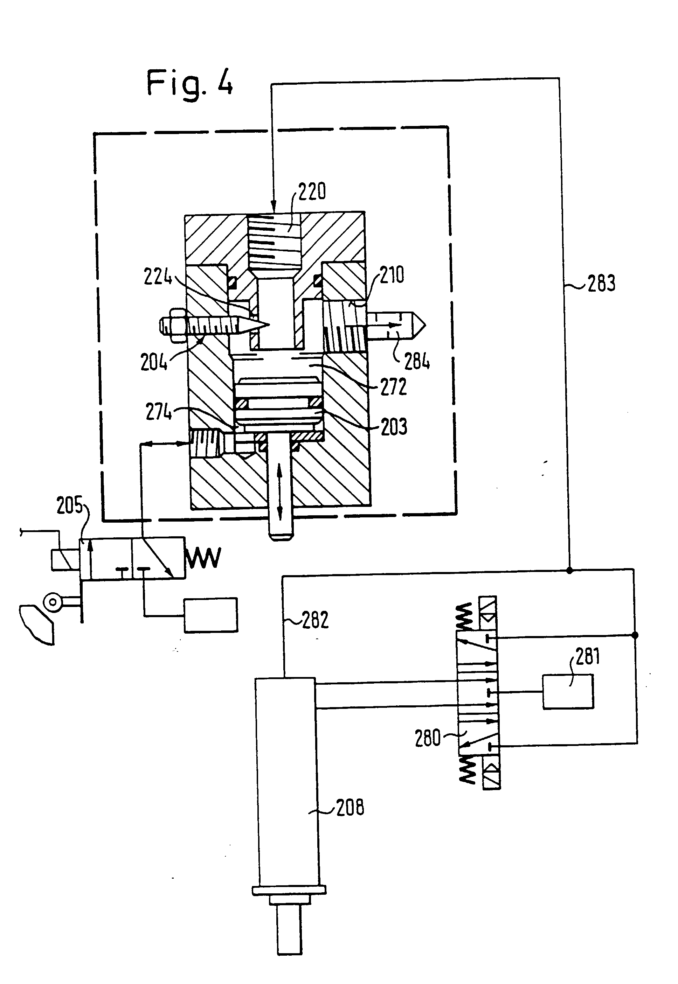

Figur 4 zeigt ein Anwendungsbeispiel des Schaltventils nach Figur 1, in dem das Schaltventil zur Steuerung der Abluft eines Pneumatikmotors 208 dient. Der Pneumatikmotor 208 wird von einer Druckmittelquelle 281 beaufschlagt, wobei ein zwischen der Druckmittelquelle 281 und dem Pneumatikmotor 208 angeordnetes vorzugsweise magnetisch betätigtes Steuerventil 280 die Drehrichtung des Pneumatikmotors 208 vorgibt. Die Abluftleitung 282, 283 leitet die vom Pneumatikmotor 208 ausströmende Abluft zum zweiten Druckmittelanschluß 220 des Steuerventils. Am Ausgang des ersten Druckmittelanschlusses 210 des Steuerventils ist ein Schalldämpfer 284 angeordnet, der die aus dem Schaltventil ausströmende Abluft schallgedämpft ins Freie abgibt.

Wird durch Betätigung des Vorsteuerventils 205 der Kolben 203 in seine Schließstellung gefahren, so baut sich im Durchflußraum 272 des Schaltventils sowie in der Abluftleitung 282, 283 ein Staudruck auf, der den Pneumatikmotor 208 auf eine langsamere Geschwindigkeit herabbremst, die mittels des Drosselventils 204 über die vom Drosselventil freigegebene freie Querschnittsfläche der Drosselöffnung 224 einstellbar ist.

Wird durch erneute Betätigung des Vorsteuerventils 205 der Druck im Steuerdruckraum 274 abgebaut, so stellt sich der Kolben 203 aufgrund des auf ihm lastenden Abluftdruckes des Pneumatikmotors 208 wieder in seine geöffnete Stellung zurück. Das Zurückbewegen des Kolbens 203 geschieht unter kontinuierlicher Verdrängung des Steuerdruckmittels aus dem Steuerdruckraum 274, so daß sich der Durchflußraum 272 kontinuierlich vergrößert und damit der freie Durchflußquerschnitt im Schaltventil kontinuierlich ansteigt, was wiederum zu einem kontinuierlichen Geschwindigkeitsanstieg im Pneumatikmotor 208 führt.

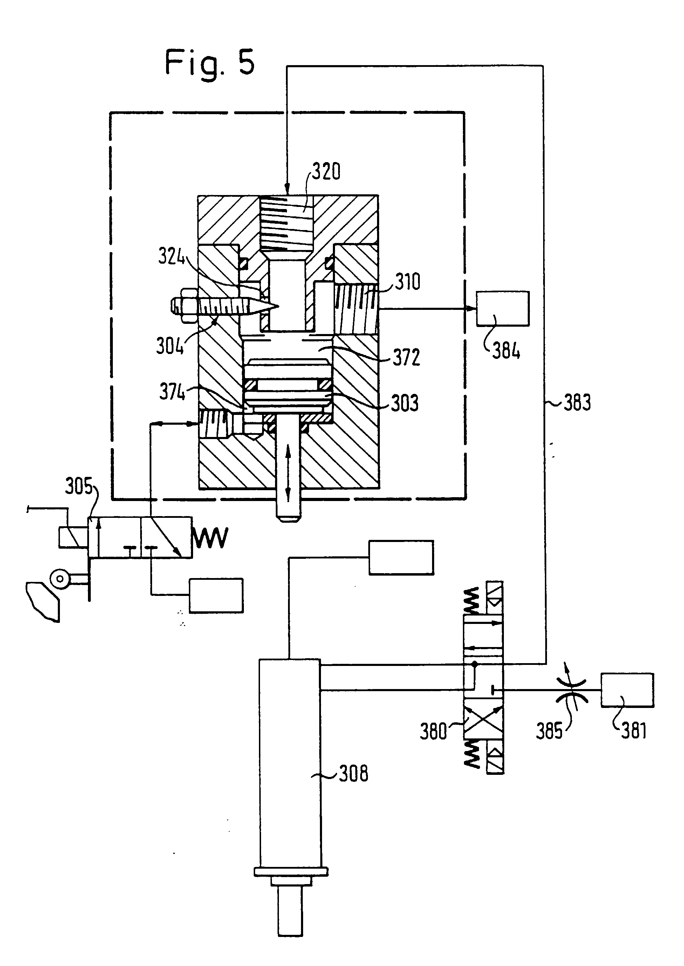

In Figur 5 ist ein Aufbau ähnlich dem in Figur 4 dargestellt, wobei ebenfalls das Schaltventil der Figur 1 Verwendung findet, der aber den Betrieb mit einem Hydraulikmotor 308 betrifft. Der Antrieb des Hydraulikmotors 308 erfolgt von einer Druckquelle 381, die über eine Einlaßdrossel 385 und ein Ventil 380 zur Steuerung der Drehrichtung mit dem Hydraulikmotor 308 in Verbindung steht. Die Rücklaufleitung 383 für das aus dem Hydraulikmotor 308 abfließende Hydraulikfluid ist zum zweiten Druckmittelanschluß 320 des Schaltventils geführt. Vom ersten Druckmittelanschluß 310 des Schaltventils führt eine Abflußleitung zu einem Hydraulik-Rücklauftank 384.

Wird der Kolben 303 betätigt, so wird unter Ausbildung eines einstellbaren Staudrucks in der Rücklaufleitung 383 entsprechend dem vom Drosselventil 304 eingestellten Drosselquerschnitt der Drosselöffnung 324 die Drehgeschwindigkeit des Hydraulikmotors 308 auf eine langsamere Geschwindigkeit heruntergebremst.

Wird anschließend durch erneute Betätigung des Vorsteuerventils 305 der Vorsteuerdruck im Steuerdruckraum 374 weggeschaltet, so wird der Kolben 303 aufgrund des auf ihn wirkenden Staudrucks in der Rücklaufleitung 383 in seine unterste Position zurückbewegt, wodurch der freie Querschnitt des Durchflußraums 372 ansteigt und sich die Geschwindigkeit des Hydraulikmotors 308 kontinuierlich wieder erhöht.

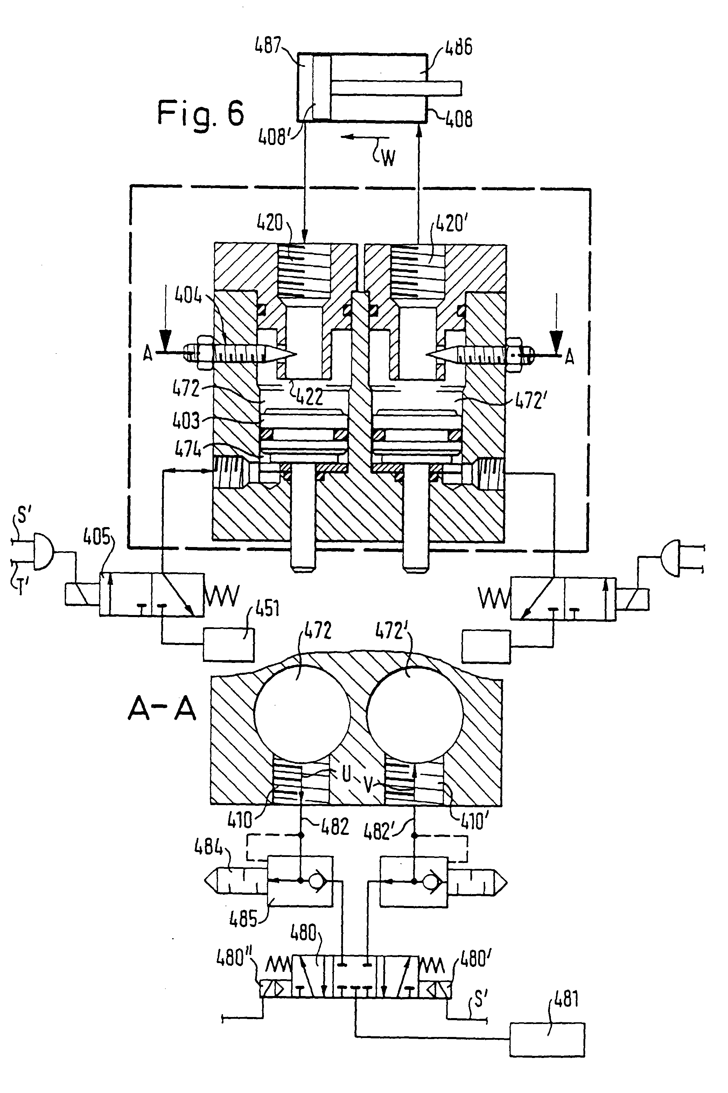

In Figur 6 ist das Doppelventil der Figur 3 in einer Beispielanwendung dargestellt. Mit dieser Anordnung können zwei getrennte Medienräume 486, 487 eines Pneumatikzylinders 408 individuell gesteuert werden. Über das mit einer Druckluftquelle 481 verbundene Steuerventil 480 kann die Bewegungsrichtung des Pneumatikzylinders 408 bestimmt werden.

Wir der Magnet 480' des Magnetventils 480 durch das Steuersignal S' erregt, so strömt die Zuluft über die Anschlußleitung 482' entsprechend dem Pfeil V durch den ersten Druck mittelanschluß 410' in den Durchflußraum 472'. Von dort strömt die Druckluft durch den zweiten Druckmittelanschluß 420' in den ersten Medienraum 486 des Pneumatikzylinders 408, wodurch der Kolben 408' des Pneumatikzylinders in Figur 6 nach links bewegt wird (Pfeil W).

Die aus dem zweiten Medienraum 487 des Pneumatikzylinders 408 austretende Luft strömt durch den zweiten Druckmittelanschluß 420 des zweiten Schaltventils dieses Ventilblocks in den Durchflußraum 472 und aus diesem durch den ersten Druckmittelanschluß 410 entsprechend dem Pfeil U über die Anschlußleitung 482 und dem Schalldämpfer 484 des Schnellentlüftungsventil 485 aus.

Um die Bewegung des Kolbens 408' des Pneumatikzylinders 408 abzubremsen, wird bei gleichzeitigem Anliegen des Steuersignals S' und des Schaltsignals T' das Vorsteuerventil 405 betätigt, wodurch Druckmittel aus der Druckmittelquelle 451 in den Steuerdruckraum 474 fließt und den Kolben 403 unter Verkleinerung des Durchflußraums 472 bis zur Anlage an den Ventilsitz 422 bewegt. Der auf diese Weise im zweiten Schaltventil des Ventilblocks entstehende Gegendruck behindert den Abfluß der Abluft aus dem zweiten Medienraum 487 des Pneumatikzylinders 408 und bremst so die Bewegung des Kolbens 408' bis auf die mittels des Drosselventils 404 eingestellte Schleichganggeschwindigkeit ab, so daß sich der Kolben 408' des Pneumatikzylinders mit der eingestellten Schleichganggeschwindigkeit dem Zylinderboden des zweiten Medienraums 487 nähert und dort zur Anlage gerät.

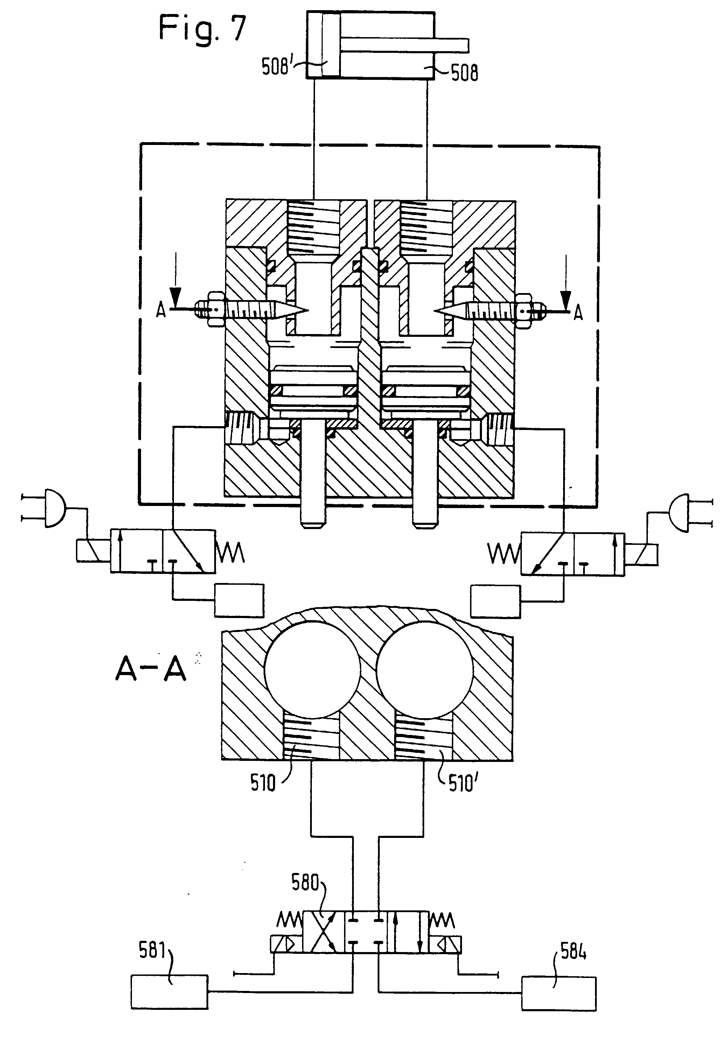

Figur 7 zeigt eine zur Figur 6 analoge Anordnung, wobei jedoch ein Hydraulikzylinder 508 angetrieben wird. Die Funktionsweise der in Figur 7 gezeigten Anordnung geschieht analog der in Figur 6 gezeigten Anordnung, wobei das aus einer Druckquelle 581 fließende Druckfluid durch ein Ventil 580 direkt dem für die gewünschte Bewegungsrichtung des Kolbens 508' des Hydraulikzylinders 508 zugeordneten ersten Druckmittelanschluß 510, 510' des Schaltventilblocks zugeführt wird. Aus dem jeweils anderen ersten Druckmittelanschluß 510', 510 fließt dann das rücklaufende Druckfluid in den Rücklauftank 584.

Das als Positionierschaltblock insbesondere für pneumatische oder hydraulische Hochgeschwindigkeitsachsen-Antriebe ausgebildete Schaltventil der Erfindung kann zum Umsteuern von Eilgang auf Schleichgang bei hydraulischen oder pneumatischen Motoren, bei hydraulischen oder pneumatischen KolbenZylinder-Antrieben oder auch bei hydraulischen oder pneumatischen Drehkolbenantrieben Verwendung finden. Eine Anpassung an vorhandene Verrohrungen kann durch dem Fachmann bekannte Maßnahmen außerhalb des Schaltventils erfolgen.

## Patentansprüche

1. Schaltventil für pneumatische oder hydraulische Druckmittel mit einem Gehäuse (1), das einen ersten und einen zweiten Druckmittelanschluß (10, 20) aufweist, die innerhalb des Gehäuses (1) miteinander in Verbindung stehen, und einem im Gehäuse (1) angeordneten Ventilglied (3), das mit einem Ventilsitz (22) als Ventilanordnung zusammenwirkt und von einer Offenstellung in eine Schließstellung umschaltbar ist,
dadurch **gekennzeichnet**,
daß der erste Druckmittelanschluß (10) und der zweite Druckmittelanschluß (20) jeweils mit einem in einem Gehäusehohlraum gebildeten Durchflußraum (72) für das Druckmittel verbunden sind, durch den in der Offenstellung des Ventilglieds (3) eine im wesentlichen ungehinderte Strömung des Druckmittels von dem zweiten Druckmittelanschluß (20) zum ersten Druckmittelanschluß (10) möglich ist, daß der zweite Druckmittelanschluß (20) ein freies Ende aufweist, das sich in den Durchflußraum (72) hinein erstreckt und den Ventilsitz (22) für das Ventilglied (3) bildet, daß das Ventilglied (3) eine den Durchflußraum bodenseitig begrenzende Fläche (31) aufweist, die dem Ventilsitz (22) gegenüberliegend angeordnet ist, so daß das einströmende Druckmittel gegen die Fläche (31) geleitet wird, und daß das Ventilglied (3) von der Offenstellung, in der Ventilglied (3) und Ventilsitz (22) voneinander getrennt sind, in die Schließstellung, in der die Fläche (31) des Ventilglieds (3) am Ventilsitz (22) anliegt, gesteuert verfahrbar ist, wobei beim Öffnen des Ventils eine Volumenvergrößerung und beim Schließen des Ventils eine Volumenverkleinerung des Durchflußraums (72) erfolgt.

2. Schaltventil nach Anspruch 1,
dadurch **gekennzeichnet,**
daß das Ventilglied als Kolben (3) ausgebildet ist und daß das Gehäuse (1) einen Zylinderabschnitt (70) aufweist, in dem der Kolben (3) axial verschiebbar aufgenommen ist.

3. Schaltventil nach Anspruch 1,
dadurch **gekennzeichnet**,
daß das Ventilglied als Membran ausgebildet ist, die im Gehäusehohlraum aufgenommen ist.

4. Schaltventil nach Anspruch 1, 2 oder 3,
dadurch **gekennzeichnet,**
daß der Gehäusehohlraum auf der vom Durchflußraum (72) abgewandten Seite des Ventilglieds (3) einen Steuerdruckraum (74) bildet, der mit einem im Gehäuse (1) vorgesehenen Steuerdruckanschluß (12) verbunden ist.

5. Schaltventil nach einem der Ansprüche 1 bis 4,
dadurch **gekennzeichnet**,
daß der erste Druckmittelanschluß (10) und der zweite Druckmittelanschluß (20) unabhängig von dem vom Ventilsitz (22) und dem Ventilglied (3) gebildeten Ventil über eine Drosselöffnung (24) miteinander verbunden sind.

6. Schaltventil nach Anspruch 5,
dadurch **gekennzeichnet**,
daß im Gehäuse ein Drosselventil (4) zur Einstellung des wirksamen Querschnitts der Drosselöffnung (24) vorgesehen und das Drosselventil (4) insbesondere zur Erzielung eines vorgegebenen wirksamen Querschnitts der Drosselöffnung (24) fest einstellbar ist.

7. Schaltventil nach Anspruch 6,
dadurch **gekennzeichnet**,
daß das Drosselventil (4) zwischen einem vorgegebenen wirksamen Querschnitt der Drosselöffnung (24) und einer Schließstellung umschaltbar oder zur Erzielung unterschiedlicher wirksamer Querschnitte der Drosselöffnung (24) variabel verstellbar ist, und daß das Drosselventil (4) vorzugsweise einen mit einer an seiner Spitze vorzugsweise kegeligen Dichtfläche (42) versehenen Drosselstift (40) aufweist.

8. Schaltventil nach einem der vorhergehenden Ansprüche,
dadurch **gekennzeichnet**,
daß der zweite Druckmittelanschluß (20) in einen von einem sich in den Durchflußraum (72) erstreckenden rohrförmigen Ansatz (28) gebildeten Kanal (27) übergeht, der vorzugsweise koaxial zum Zylinderabschnitt (70) verläuft und an dessen freiem Ende der Ventilsitz (22) ausgebildet ist, so daß der Durchflußraum (72) bei geschlossenem Ventil im wesentlichen zu einem Ringraum reduziert ist.

9. Schaltventil nach den Ansprüchen 7 und 8,
dadurch **gekennzeichnet**,
daß die Drosselöffnung (24) in der Umfangswand des rohrförmigen Ansatzes (28) vorgesehen ist, daß sich der Drosselstift (40) radial durch die Wand des Gehäusegrundkörpers (7) erstreckt, und daß der erste Druckmittelanschluß (10) vorzugsweise im wesentlichen radial in den Ringraum mündet.

10. Schaltventil nach einem der vorhergehenden Ansprüche,
dadurch **gekennzeichnet,**
daß das Gehäuse zwei Teile umfaßt, nämlich einen Gehäusegrundkörper (7), der den vorzugsweise den Zylinderabschnitt (70) und den Durchflußraum (72) des Gehäuses (1) umfassenden Gehäusehohlraum beherbergt sowie den Steuerdruckanschluß (12) und den ersten Druckmittelanschluß (10) aufweist, und einen Anschlußflansch (2), der den Durchflußraum (72) im wesentlichen stirnseitig begrenzt und den zweiten Druckmittelanschluß (20) mit dem Ventilsitz (22) aufweist.

11. Schaltvorrichtung, welche zwei Schaltventile nach einem der vorhergehenden Ansprüche umfaßt,
dadurch **gekennzeichnet,**
daß beide Schaltventile ein gemeinsames Gehäuse (107) aufweisen und daß die mit den ersten Druckmittelanschlüssen (110, 110') und den zweiten Druckmittelanschlüssen (120, 120') verbundenen Durchflußräume (171, 171') der Schaltventile voneinander getrennt und deren Volumen unabhängig voneinander veränderbar sind.

## Claims

1. Switching valve for pneumatic or hydraulic pressure media comprising a housing (1) having a first and a second pressure medium connection (10, 20) which communicate with each other within the housing (1), and a valve member (3) arranged in the housing (1) which cooperates with a valve seat (22) as a valve arrangement and can be switched over from an open position into a closed position, characterised in that the first pressure medium connection (10) and the second pressure medium connection (20) are respectively connected to a throughflow space (72) for the pressure medium formed in a housing cavity, with a substantially unhindered flow of the pressure medium from the second pressure medium connection (20) to the first pressure medium connection (10) through the throughflow space being possible in the open position of the valve member (3); in that the second pressure medium connection (20) has a free end which extends into the throughflow space (72) and forms the valve seat (22) for the valve member (3); in that the valve member (3) has a surface (31) which bounds the base of the throughflow space and is arranged opposite to the valve seat (22) so that the inflowing pressure medium is directed against the surface (31); and in that the valve member (3) can be controllably moved from the open position in which the valve member (3) and the valve seat (22) are separated from one another into the closed position in which the surface (31) of the valve member (3) contacts the valve seat (22), with a volume increase of the throughflow space (72) taking place on opening of the valve and a volume reduction of the throughflow space (72) taking place on closing of the valve.

2. Switching valve in accordance with claim 1,
characterised in that the valve member is formed as a piston (3), and in that the housing (1) has a cylinder section (70) in which the piston (3) is axially displaceably received.

3. Switching valve in accordance with claim 1,
characterised in that the valve member is formed as a membrane which is received in the hollow cavity of the housing.

4. Switching valve in accordance with claim 1, claim 2 or claim 3, characterised in that the cavity of the housing forms a pressure control space (74) at the side of the valve member (3) remote from the throughflow space (72), the pressure control space (74) being connected to a pressure control connection (12) provided in the housing (1).

5. Switching valve in accordance with one of the claims 1 to 4, characterised in that the first pressure medium connection (10) and the second pressure medium connection (20) are connected together via a restrictor opening (24) independently of the valve formed by the valve seat (22) and the valve member (3).

6. Switching valve in accordance with claim 1,
characterised in that a restrictor valve (4) is provided in the housing for adjusting the active cross-section of the restrictor opening and the restrictor valve (4) is in particular fixedly adjustable to achieve a predetermined effective cross-section of the restrictor opening (24).

7. Switching valve in accordance with claim 6,
characterised in that the restrictor valve (4) can be switched over between a predetermined effective cross-section of the restrictor opening (24) and a closed position, or can be variably adjustable to achieve different effective cross-sections of the restrictor opening (24); and in that the restrictor valve (4) preferably has a restrictor pin (40) provided with a preferably conical sealing surface (42) at its tip.

8. Switching valve in accordance with one of the preceding claims, characterised in that the second pressure medium connection (20) passes into a channel (27) formed by a tubular projection (28) extending into the throughflow space (72), with the channel preferably extending coaxial to the cylinder section (70), and with the valve seat (22) being formed at its free end, so that the throughflow space (72) is reduced essentially to a ring space when the valve is closed.

9. Switching valve in accordance with the claims 7 and 8, characterised in that the restrictor opening (24) is provided in the peripheral wall of the tubular projection (28); in that the restrictor pin (40) extends radially through the wall of the base body (7) of the housing; and in that the first pressure medium connection (10) preferably opens essentially radially into the ring space.

10. Switching valve in accordance with one of the preceding claims, characterised in that the housing includes two parts, namely a housing base body (7), which accommodates the housing cavity which preferably includes the cylinder portion (70) and the throughflow space (72) of the housing (1) and also has the pressure control connection (12) and the first pressure medium connection (10), and a connection flange (2) which bounds the throughflow space (72) essentially at its free end and which has the second pressure medium connection with the valve seat (22).

11. Switching apparatus which comprises two switching valves in accordance with one of the preceding claims,
characterised in that both switching valves have a common housing (107), and in that the throughflow spaces (171, 171') of the switching valves connected to the first pressure medium connections (110, 110') and the second pressure medium connections (120, 120') are separate from one another and their volumes are variable independently of one another.

## Revendications

1. Soupape de commutation pour fluide pneumatique ou hydraulique, comprenant un boîtier (1), qui présente un premier et un second raccord à fluide (10, 20), qui sont en liaison l'un avec l'autre à l'intérieur du boîtier (1), et un organe de soupape (3) agencé dans le boîtier (1), lequel coopère avec un siège de soupape (22) pour former un agencement de soupape et peut être passé depuis une position d'ouverture jusque dans une position de fermeture, caractérisée en ce que le premier raccord à fluide (10) et le second raccord à fluide (20) sont respectivement reliés à une chambre de passage (72) pour le fluide, formée dans une cavité du boîtier, et grâce à laquelle un écoulement sensiblement sans empêchement du fluide est possible dans la position d'ouverture de l'organe de soupape (30) depuis le second raccord à fluide (20) jusqu'au premier raccord à fluide (10), en ce que le second raccord à fluide (20) présente une extrémité libre qui s'étend jusqu'à l'intérieur de la chambre de passage (72) et forme le siège de soupape (22) pour l'organe de soupape, en ce que l'organe de soupape (3) comporte une surface (31) qui délimite la chambre de passage du côté du fond et qui est agencée à l'opposé du siège de soupape (22) de manière que le fluide qui entre est mené contre la surface (31), et en ce que l'organe de soupape (3) peut être déplacé de façon commandée depuis la position d'ouverture, dans laquelle l'organe de soupape (3) et le siège de soupape (22) sont séparés l'un de l'autre, jusque dans la position de fermeture dans laquelle la surface (31) de l'organe de soupape (3) est appliquée contre le siège de soupape (22), et lors de l'ouverture de la soupape, il se produit une augmentation de volume de la chambre de passage (72) et lors de la fermeture de la soupape une réduction du volume de cette chambre.

2. Soupape de commutation selon la revendication 1, caractérisée en ce que l'organe de soupape est réalisé sous forme d'un piston (30) et en ce que le boîtier (1) présente un tronçon cylindrique (70) dans lequel est reçu le piston (3) en déplacement axial.

3. Soupape de commutation selon la revendication 1, caractérisée en ce que l'organe de soupape est réalisé sous forme d'une membrane qui est reçue dans la cavité du boîtier.

4. Soupape de commutation selon l'une des revendications 1, 2 ou 3, caractérisée en ce que la cavité du boîtier forme du côté détourné de la chambre de passage (72) de l'organe de soupape (3) une chambre de commande (74) qui est reliée à un raccord de commande (12) prévu dans le boîtier (1).

5. Soupape de commutation selon l'une quelconque des revendications 1 à 4, caractérisée en ce que le premier raccord à fluide (10) et le second raccord à fluide (20) sont reliés l'un à l'autre via une ouverture à étranglement (24), indépendamment de la soupape formée par le siège de soupape (22) et l'organe de soupape (30).

6. Soupape de commutation selon la revendication 5, caractérisée en ce qu'il est prévu dans le boîtier une soupape à étranglement (4) pour régler la section efficace de l'ouverture à étranglement (24), et en ce que la soupape à étranglement (4) est susceptible d'être réglée de façon fixe, en particulier pour atteindre une section efficace prédéterminée de l'ouverture à étranglement (24).

7. Soupape de commutation selon la revendication 6, caractérisée en ce que la soupape à étranglement (4) peut être passée entre une section efficace prédéterminée de l'ouverture à étranglement (24) et une position de fermeture, ou bien en ce qu'elle peut être réglée de manière variable pour atteindre des sections efficaces différentes de l'ouverture à étranglement (24), et en ce que la soupape à étranglement (4) présente de préférence une tige d'étranglement (40) pourvue à sa pointe d'une surface d'étanchéité (42) de préférence conique.

8. Soupape de commutation selon l'une quelconque des revendications précédentes, caractérisée en ce que le second raccord à fluide (20) se transforme en un canal (27) formé par un talon de forme tubulaire (28) qui s'étend jusque dans la chambre de passage (72), ledit canal s'étendant de préférence de manière coaxiale au tronçon de cylindre (70) et où le siège de soupape (22) est réalisé à son extrémité libre, de sorte que la chambre de passage (72) est sensiblement réduite à un espace annulaire lorsque la soupape est fermée.

9. Soupape de commutation selon les revendications 7 et 8, caractérisée en ce que l'ouverture à étranglement (24) est ménagée dans la paroi périphérique du talon de forme tubulaire (28), en ce que la tige d'étranglement (40) s'étend radialement à travers la paroi du corps de base (7) du boîtier, et en ce que le premier raccord à fluide (10) débouche de préférence sensiblement radialement dans la chambre annulaire.

10. Soupape de commutation selon l'une quelconque des revendications précédentes, caractérisée en ce que le boîtier comprend deux parties, à savoir un corps de base de boîtier (7) qui abrite de préférence la cavité du boîtier qui comprend le tronçon cylindrique (70) et la chambre de passage (72) du boîtier (1) et inclut le raccord de commande (12) et le premier raccord à fluide (10), et qui comprend une bride de raccordement (2) qui délimite sensiblement du côté frontal la chambre de passage (72) et qui comporte le second raccord à fluide (20) avec le siège de soupape (22).

11. Dispositif de commutation, qui comprend deux soupapes de commutation selon l'une quelconque des revendications précédentes, caractérisé en ce que les deux soupapes de commutation comportent un boîtier commun (107), et en ce que les chambres de passage (171, 171') des soupapes de commutation, qui sont reliées au premier raccord à fluide (110, 110') et au second raccord à fluide (120, 120') sont séparées l'une de l'autre, et en ce que leurs volumes peuvent être modifiés indépendamment l'un de l'autre.
